# EUROPEAN PATENT SPECIFICATION

(11) **EP 3 028 524 B1**
(45) Date of publication and mention of the grant of the patent: **27.05.2020**
(21) Application number: 14798928.9
(22) Date of filing: 21.07.2014
(51) Int. Cl.: H04W 76/00, H04W 64/00

(54) **METHODS AND APPARATUSES FOR ESTABLISHING RADIO BEARER**
VERFAHREN UND VORRICHTUNGEN ZUR HERSTELLUNG EINES FUNKTRÄGERS
PROCÉDÉS ET APPAREILS D'ÉTABLISSEMENT DE PORTEUSE RADIO

(30) Priority: 02.08.2013 CN 201310337077
(43) Date of publication of application: 08.06.2016
(73) Proprietor: Alcatel Lucent, 91620 Nozay (FR)
(72) Inventor: WEN, Pingping, Shanghai 201206 (CN); DENG, Yun, Shanghai 201206 (CN); WORRALL, Chandrika, Newbury Berkshire RG14 6SN (GB)
(74) Representative: Novagraaf Technologies
(86) International application number: PCT/IB2014/001535
(87) International publication number: WO 2015/015293

(56) References cited:
- INTEL CORPORATION: "User plane architecture for Dual Connectivity", 3GPP DRAFT; R2-131982, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130525 11 May 2013 (2013-05-11), XP050700111, Retrieved from the Internet: URL:http://www.3gpp.org/ftp/tsg_ran/WG2_RL 2/TSGR2_82/Docs/ [retrieved on 2013-05-11]
- ERICSSON ET AL: "Impact of small cell enhancements to RRC functions", 3GPP DRAFT; R2-131672 IMPACT OF SMALL CELL ENHANCEMENTS TO RRC FUNCTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Fukuoka, Japan; 20130520 - 20130524 11 May 2013 (2013-05-11), XP050700023, Retrieved from the Internet: URL:http://www.3gpp.org/ftp/tsg_ran/WG2_RL 2/TSGR2_82/Docs/ [retrieved on 2013-05-11]
- "3rd Generation Partnership Project; Technical Specification Group Radio Access Network; Evolved Universal Terrestrial Radio Access (E-UTRA); Study on Small Cell Enhancements for E-UTRA and E-UTRAN - Higher layer aspects (Release", 3GPP DRAFT; R2-132226 36842-011, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 May 2013 (2013-05-01), XP050816204, Retrieved from the Internet: URL:http://www.3gpp.org/ftp/tsg_ran/WG2_RL 2/R2_TSs_TRs_early_versions/History/TR36.8 42_Small_cell_enh/v0.1.1/ [retrieved on 2013-05-01]

## Description

### FIELD OF TECHNOLOGY

The present invention generally relates to a radio communication system, and more specifically to a method and an apparatus for establishing data or signaling bearers in a radio communication system supporting multi-connectivity.

### BACKGROUND OF THE INVENTION

Due to a gain for the capacity improvement and a gain in respect of blind spot coverage brought by low power nodes, focus of more and more studies is directed to deployment and enhancement of small cells covered by the low power nodes. Here, a low power node may be a small-sized base station, and its example includes but is not limited to low power base stations such as Pico or Femto. In 3GPP R12, one new Study Item "Small Cell Enhancements for E-UTRA and E-UTRAN Higher-layer aspects" has been approved and one important point is to support dual/multi-connectivity to a macro cell (a cell coverage of which is provided by a macro base station) layer and a small cell layer.

In radio communication, different radio bearers are needed to be established to provide different QoS for different data. The user plane data (short for "UP") will be transmitted on a data radio bearer ("DRB") and the control plane data (short for "CP") will be transmitted on a signaling radio bearer ("SRB"). In the case of dual/multi-connectivity, a user equipment (UE) will connect to two or more bases stations, wherein one base station for example may be a macro base station and the other base station for example may be a small base station. The term "base station" herein may be alternatively called node B and evolved node B ("eNB") along with evolution of the radio communication. To this end, how to establish the SRB and DRB should be considered in the event of dual connectivity or even multi-connectivity. For example, DRB/SRB parameters, including parameters for packet data convergence protocol ("PDCP"), radio link control ("RLC"), media access control ("MAC") and physical layer, are configured by which cell. For another example, a radio resource control ("RRC") message (e.g., "RRCConnectionReconfiguration message") for DRB/SRB establishment is formed and sent by which cell.

In view of the above, in current 3GPP release, the UE is not supported to have connectivity to multiple cells in different nodes, therefore there is no specification on how to establish DRB and SRB to different cells for the different UP and CP architecture options.

ERICSSON ET AL: "Impact of small cell enhancements to RRC functions", 3GPP DRAFT; R2-131672 IMPACT OF SMALL CELL ENHANCEMENTS TO RRC FUNCTIONS, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX vol. RAN WG2, no. Fukuoka, Japan; 20130520 - 20130524 11 May 2013 discloses impact of small cell enhancements for different RRC functions.

### SUMMARY OF THE INVENTION

The scope of the invention is defined by the appended claims.

To solve at least some technical problems mentioned above, the present invention provides a mechanism for effectively establishing a data bearer and a signaling bearer in a radio communication system supporting multi-connectivity, so that the data bearer and the signaling bearer are established in a macro cell and a small cell and thereby dual connectivity or even multi-connectivity can be supported and implemented.

According to one aspect of the present invention, there is provided a method for establishing a data bearer in a radio communication system supporting multi-connectivity, wherein the radio communication system comprises a user equipment and at least two base stations connected to the UE, the at least two base stations comprise at least one macro base station and at least one small base station. The method comprises receiving information related to the data bearer. The method also comprises determining configuration information of respective protocol layers in a user plane protocol stack, that is established at at least one of the macro base station and the small base station for the data bearer, according to the related information and the user plane protocol stack. The method further comprises sending a radio resource control message including the configuration information to the user equipment to establish the data bearer.

In an embodiment, wherein the user plane protocol stack established at the at least one of the macro base station and the small base station for the data bearer comprises a packet data convergence protocol layer, a radio link control layer, a media access control layer, and a physical layer.

In another embodiment, wherein the macro base station is connected to a gateway to transmit data, and a bearer splitting operation is not performed in the macro base station or a bearer splitting operation is performed in the macro base station.

In a further embodiment, wherein the bearer splitting operation is not performed in the macro base station, and the small base station comprises no radio resource control entity, the method further comprises:
receiving configuration information of the respective protocol layers determined at the small base station; and
forming the radio resource control message at the macro base station, wherein the radio resource control message includes configuration information determined at the small base station or includes both configuration information determined at the small base station and configuration information determined at the macro base station, and the radio resource control message further includes an identifier of the small base station.

In an embodiment, wherein the bearer splitting operation is performed in the macro base station to split the bearer into a first bearer branch transmitted through the small base station and a second bearer branch transmitted through the macro base station. The small base station comprises no radio resource control entity. The method further comprises:
receiving configuration information determined at the small base station for the first bearer branch; and
forming the radio resource control message at the macro base station, wherein the radio resource control message includes the configuration information determined at the small base station for the first bearer branch or includes both configuration information determined at the small base station and at the macro base station for the first bearer branch and configuration information determined at the macro base station for the second bearer branch, wherein the radio resource control message further includes an identifier of the small base station associated with the first bearer branch and an identifier of the macro base station associated with the second bearer branch.

In another embodiment, wherein sending the radio resource control message to the user equipment comprises:
sending from the macro base station to the user equipment the radio resource control message, the radio resource control message including synchronization information enabling the user equipment and the small base station to use the configuration information in synchronization; and
receiving at the macro base station a response to the radio resource control message from the user equipment and forwarding the response to the small base station;
or
forwarding from the small base station to the user equipment the radio resource control message from the macro base station; and
receiving at the small base station a response to the radio resource control message from the user equipment.

In a further embodiment, wherein the bearer splitting operation is not performed in the macro base station, and the small base station comprises a radio resource control entity. The method further comprises:
forming the radio resource control message at the small base station, wherein the radio resource control message includes configuration information determined at the small base station or includes both configuration information determined at the small base station and configuration information determined at the macro base station and received from the macro base station;
sending from the small base station to the user equipment the radio resource control message including the configuration information; and
receiving a response to the radio resource control message from the user equipment.

In an embodiment, wherein the bearer splitting operation is performed in the macro base station to split the bearer into a first bearer branch transmitted through the small base station and a second bearer branch transmitted through the macro base station. The small base station comprises a radio resource control entity. The method further comprises:
forming the radio resource control message at the small base station, wherein the radio resource control message includes configuration information determined for the first bearer branch or includes both configuration information determined for the first bearer branch and configuration information determined for the second bearer branch and received from the macro base station, wherein the configuration information determined for the first bearer branch is the configuration information determined at the small base station for the first bearer branch or includes both configuration information determined at the small base station and at the macro base station for the first bearer branch, and the radio resource control message further includes an identifier of the small base station associated with the first bearer branch and an identifier of the macro base station associated with the second bearer branch;
sending the radio resource control message from the small base station to the user equipment; and
receiving a response to the radio resource control message from the user equipment.

In another embodiment, wherein the radio resource control message is a radio resource control connection reconfiguration message, and in the radio resource control connection reconfiguration message:
the configuration information for the first bearer branch and the second bearer branch is respectively included in two drb-ToAddMods and is respectively identified with identifiers of the small base station and the macro base station, and the two drb-ToADDMods are included in the same drb-ToAddModList; or
the configuration information for the first bearer branch and the second bearer branch is respectively included in the same drb-ToAddMod and is respectively identified with identifiers of the small base station and the macro base station, and the drb-ToAddMods is included in the same drb-ToAddModList.

In an embodiment, wherein the macro base station and the small base station are connected to a gateway to transmit data, and a bearer splitting operation is not performed in the macro base station.

In a further embodiment, wherein the small base station comprises no radio resource control entity, and the method further comprises:
receiving from the small base station configuration information determined from the related information;
sending from the macro base station to the user equipment the radio resource control message including the configuration information determined at the small base station, to establish the data bearer, wherein the radio resource control message further includes an identifier of the small base station and synchronization information enabling the user equipment and the small base station to use the configuration information in synchronization; and
receiving a response to the radio resource control message from the user equipment and forwarding the response to the small base station;
or,
sending the configuration information determined at the small base station to the macro base station;
receiving from the macro base station the radio resource control message including the configuration information determined at the small base station and the macro base station;
sending the radio resource control message from the small base station to the user equipment; and
receiving a response to the radio resource control message from the user equipment.

In a further embodiment, wherein the small base station comprises a radio resource control entity, and the method further comprises:
sending from the small base station to the user equipment the radio resource control message including configuration information determined by the small base station according to the related information; and
receiving a response to the radio resource control message from the user equipment.

According to another aspect of the present invention, there is provided a method for establishing a signaling bearer in a radio communication system supporting multi-connectivity, wherein the radio communication system comprises a user equipment and at least two base stations connected to the user equipment, and the at least two base stations comprise at least one macro base station and at least one small base station. The method comprises receiving configuration information of respective protocol layers in a user plane protocol stack, that is established at at least one of the macro base station and the small base station for the signaling bearer, determined based on the user plane protocol stack. The method also comprises sending to the user equipment the radio resource control message including the configuration information to establish the signaling bearer.

In an embodiment, wherein configuration of respective protocol layers in the user plane protocol stack that is established at the at least one of the macro base station and the small base station for the signaling bearer comprises configuration for a radio link control layer, a media access control layer, and a physical layer.

In another embodiment, the method further comprises receiving configuration information of respective protocol layers determined at the small base station and forming the radio resource control information at the macro base station, wherein the radio resource control message includes configuration information determined at the small base station or includes both configuration information determined at the small base station and configuration information determined at the macro base station.

In a further embodiment, wherein the radio resource control message further includes synchronization information enabling the user equipment and the small base station to use the configuration information in synchronization and an identifier of the small base station.

In a further embodiment, wherein a radio resource control message for modifying the signaling bearer is formed at the small base station and sent to the user equipment.

According to a further aspect of the present invention, there is provided an apparatus for establishing a data bearer in a radio communication system supporting multi-connectivity, wherein the radio communication system comprises a user equipment and at least two base stations connected to the user equipment, the at least two base stations comprise at least one macro base station and at least one small base station. The apparatus comprises a receiving unit configured to receive information related to the data bearer. The apparatus also comprises a determining unit configured to determine configuration information of respective protocol layers in a user plane protocol stack, that is established at at least one of the macro base station and the small base station for the data bearer, according to the related information and the user plane protocol stack. The apparatus further comprises a sending unit configured to send to the user equipment a radio resource control message including the configuration information to establish the data bearer.

According to a further aspect of the present invention, there is provided an apparatus for establishing a signaling bearer in a radio communication system supporting multi-connectivity, wherein the radio communication system comprises a user equipment and at least two base stations connected to the user equipment, the at least two base stations comprise at least one macro base station and at least one small base station. The apparatus comprises a receiving unit configured to receive configuration information of respective protocol layers in a user plane protocol stack, that is established at at least one of the macro base station and the small base station for the signaling bearer, determined based on the user plane protocol stack. The apparatus further comprises a sending unit configured to send to the user equipment a radio resource control message including the configuration information to establish the signaling bearer.

Although not set forth in detail here, the apparatus according to the above embodiments of the present invention may include various units for achieving the above-mentioned aspects and performing steps of the method in the embodiments.

By utilizing the method and apparatus according to aspects and embodiments of the present invention, the data bearer and the signaling bearer may be efficiently established in the system supporting multi-connectivity so as to provide a user of radio communication with communication services having higher rate and throughput and enable the small base station to provide better data offloading service.

### BRIEF DESCRIPTION OF THE DRAWINGS

Other features, objects and advantages of the present invention will become apparent from the following detailed description of exemplary embodiments with reference to figures. In the figures,
Figs.1A-1D schematically show diagrams of a protocol stack arrangement for establishing DRB connection according to an embodiment of the present invention;
Figs.2A-2D schematically show diagrams of a protocol stack arrangement for establishing DRB connection according to another embodiment of the present invention;
Fig.3 schematically shows a diagram of protocol stack arrangement for establishing DRB connection according to a further embodiment of the present invention;
Fig.4 schematically shows a flow chart of a method for establishing a data bearer in a radio communication system supporting multi-connectivity according to an embodiment of the present invention;
Fig.5 schematically shows a flow chart of a method for establishing a signaling bearer in a radio communication system supporting multi-connectivity according to an embodiment of the present invention;
Fig.6 schematically shows a block diagram of an apparatus for establishing a data bearer in a radio communication system supporting multi-connectivity according to an embodiment of the present invention; and
Fig.7 schematically shows a block diagram of an apparatus for establishing a signaling bearer in a radio communication system supporting multi-connectivity according to an embodiment of the present invention.

### DETAILED DESCRIPTION OF EMBODIMENTS

Multiple embodiments of the present invention provide a solution regarding DRB/SRB establishment by considering different user plane (UP) architectures and control plane (CP) architectures for dual/multi-connectivity. By adopting this solution, data transmission with respect to the dual/multi-connectivity can be implemented.

To better understand the invention. Some basic description on the user plane architecture and control plane architecture are given herein.

First, for the user plane, there are three options for splitting user plane data:
- Option 1: S1-U terminates in SeNB (i.e., a small base station is connected to a serving gateway S-GW and performs data transmission with it);
- Option 2: S1-U terminates in MeNB (i.e., a macro base station is connected to a serving gateway S-GW and performs data transmission with it), there is no bearer splitting in RAN (Radio Access Network); and
- Option 3: S1-U terminates in MeNB, there is bearer splitting in RAN.

Furthermore, based on the options for bearer splitting and UP protocol stack , totally 9 alternatives as following:
- 1A: S1-U terminates in SeNB + independent PDCPs (no bearer splitting);
- 2A: S1-U terminates in MeNB + no bearer splitting in MeNB + independent PDCPs at SeNB;
- 2B: S1-U terminates in MeNB + no bearer splitting in MeNB + master-slave PDCPs;
- 2C: S1-U terminates in MeNB + no bearer splitting in MeNB + independent RLC at SeNB;
- 2D: S1-U terminates in MeNB + no bearer splitting in MeNB + master-slave RLCs;
- 3A: S1-U terminates in MeNB + bearer splitting in MeNB + independent PDCPs for splitting bearers;
- 3B: S1-U terminates in MeNB + bearer splitting in MeNB + master-slave PDCPs for splitting bearers;
- 3C: S1-U terminates in MeNB + bearer splitting in MeNB + independent RLCs for splitting bearers; and
- 3D: S1-U terminates in MeNB + bearer splitting in MeNB + master-slave RLCs for splitting bearers.

Based on the above three options and nine alternatives, the basic idea of the invention is provided as follows:
(1) For the DRB/SRB transmitted in a small cell, the configuration can be implemented in a respective cell. The cell should configure parameters of a respective protocol layer located in it.
(2) RRC layer package can be created at a macro cell for C1 case (i.e., the macro cell includes an RRC entity while the small cell comprises no RRC entity), and RRC layer package can be created at a macro cell or small cell for C2 case (i.e., the macro cell and the small cell includes an RRC entity respectively).
(3) For all cases, since only the macro cell is connected with the MME, the macro cell should send data bearer related information from the mobility management entity ("MME") to the small cell.
(4) The RRC data can be sent to the UE through the layer 2 and layer 1 of the macro cell or the small cell, and the following cases exist:
   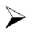 If DRB configuration information is transmitted by the macro cell to the UE, then it is not necessary to configure SRB in the small cell; for this case, SRB is only configured in the macro cell;
   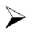 If RRC signaling (for DRB configuration) can be transmitted by the small cell to the user, then configuration of the abovementioned RRC signaling (SRB configuration) is also required to be transmitted in small cell, which should be sent to UE through the macro cell;
   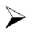 If messages of the small cell are sent via the macro cell, then the RRC signaling is required to indicate in which cell that the DRB will be established, so that the UE can know this configuration is for the RB in the small cell.
   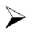 If messages of the small cell are sent via the macro cell, then an activation timer mechanism is needed as the non-ideal backhaul latency and loss or the backhaul link requires an activation time like mechanism to guarantee the UE and the small cell synchronizing in use of new configured parameters.

In order to achieve the above basic idea of the present invention, it is necessary to define a new interface (for example, called a Xn interface) for information exchange between the macro cell and the small cell, also to define a new signaling to indicate in which cell (i.e., the macro cell or the small cell) the RRC signaling including DRB and SRB is established, and furthermore, to define a new mechanism and signaling to indicate the activation time to guarantee the UE and the small cell synchronizing in use of new configured parameters.

The solution of establishing DRB according to embodiments of the present invention will be described with reference to figures below.

### Case 1: Regarding C1 and Option2 (no bearer splitting, including four alternatives 2A, 2B, 2C, and 2D)

The small cell (or called small base station) is responsible for configuring parameters for small cell.

Step1: Since the macro cell (or called macro base station) has the S1 interface, the macro cell firstly sends to the small cell DRB related information in E-RAB SETUP REQUEST from the MME such as E-RAB to be Setup List and E-RAB To Be Setup Item IEs (E-RAB ID or E-RAB Level QoS Parameters) . In an embodiment, the E-RAB SETUP REQUEST may be sent from MME to the small cell directly.

Step 2: The small cell then may configure radio resources such as various configurations of PDCP, RLC, MAC, and physical layers based on the detailed UP protocol stack division.

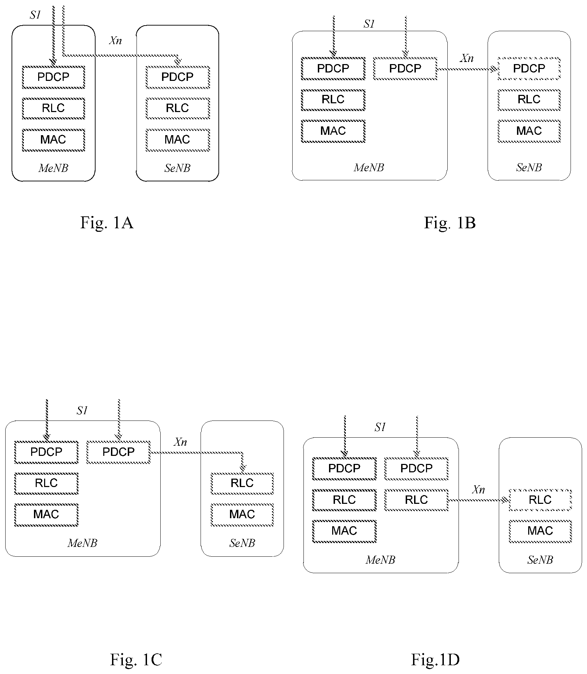

For Alternative 2A: S1-U terminates in MeNB + no bearer splitting in MeNB + independent PDCPs at SeNB, as shown in Fig.1A, SeNB configures the radio resources based on DRB-related information received from MeNB via the Xn interface, the radio resource including configuration of PDCP, RLC, MAC, and physical layers (not shown in the figure).

For Alternative 2B: S1-U terminates in MeNB + no bearer splitting in MeNB + master-slave PDCPs, as shown in Fig.1B, the small cell configures the radio resources based on DRB-related information received from MeNB via the Xn interface, i.e., determines configuration of RLC, MAC, and physical layers. For the PDCP layer, the small cell and the macro cell will separately configure the necessary resources based on the detailed master-slave PDCP function, i.e., determines configuration of the master PDCP at the macro cell, and determines configuration of the slave PDCP at the small cell.

For Alternative 2C: S1-U terminates in MeNB + no bearer splitting in MeNB + independent RLC at SeNB, as shown in Fig.1C, the small cell configures the radio resources based on DRB-related information received from MeNB via the Xn interface, i.e., determines configuration of RLC, MAC and physical layers. The macro cell is responsible for configuring resources for the PDCP layer, i.e., determines configuration of the PDCP layer.

For Alternative 2D: S1-U terminates in MeNB + no bearer splitting in MeNB + master-slave RLCs, as shown in Fig.1D, the small cell configures the radio resource based on DRB-related information received from MeNB via the Xn interface, i.e., determines configuration of MAC and physical layers. The macro cell is responsible for configuring resources for the PDCP layer. For the RLC layer configuration, the small cell and the macro cell will separately determine the slave RLC layer configuration at the small cell and the master RLC layer configuration at the macro cell based on the detailed master-slave RLC function.

Step3: The small cell sends the configuration information for the above-determined configuration in a message to the macro cell via for example the illustrated Xn interface.

For Alternative 2A, the message may for example include parameters in the *DRB-ToAddMod* message, such as *eps-Bearerldentity, drb-Identity, pdcp-Config, rlc-Config, logicalChannelIdentity,* and *logicalChannelConfig.*

For Alternative 2B, the message may for example include *rlc-Config, logicalChannelIdentity,* and *logicalChannelConfig,* and part or all of parameters of *pdcp-Config* based on the detailed master-slave PDCP function. *drb-Identity* may be sent from small cell to the macro cell. *eps-Bearerldentity* may be configured and sent at the macro cell.

For Alternative 2C, the message may for example include *rlc-Config, logicalChannelIdentity* and *logicalChannelConfig. drb-Identity* may be send from the small cell to the macro cell. *eps-Bearerldentity* may be configured and sent at the macro cell.

For Alternative 2D, the message may for example include *logicalChannelIdentity, logicalChannelConfig,* and part or all of parameters of *rlc -Config* based on the detailed master-slave RLC function. *drb-Identity* can be sent from the small cell to the macro cell. *eps-BearerIdentity* may be configured and sent at the macro cell.

In addition, if messages of the small cell are sent via the macro cell, or the RRC message is created in the macro cell, synchronization information enabling the UE and the small cell to use the determined configuration in synchronization may be sent from the small cell to the macro cell. For example, a time label and activation timer (used to express the beginning time and the duration) may be sent from the small cell to the macro cell. The time label and activation timer can be expressed with a system frame number ("SFN"). Moreover, if the RRC package is sent by the macro cell to the UE, then a cell id of the small cell should be included in the RRC message and sent to the macro cell.

Step 4: The RRC entity in the macro cell may create the RRC package, i.e. RadioResourceConfigDedicated included in the RRC connection reconfiguration ("RRCConnectionReconfiguration") message, and the RRC package may be sent by the macro cell to the UE. Alternatively, the RRC package may also be sent to the small cell and then transmitted by the small cell to the UE through the layer2/1 of the small cell. As stated above, if the RRC package is sent to the UE by the macro cell, the cell id of the small cell should be included in DRB-ToAddMod.

Optionally, the time label and activation timer from the small cell should also be included in DRB-ToAddMod and sent to the UE. By these information and mechanisms, the UE and the small cell are guaranteed to be in synchronization in use of new configured parameter.

Step5: After the UE receiving the RRC connection reconfiguration message, it will send, for example, a RRC connection reconfiguration complete ("RRCConnectionReconfigurationComplete") message to the cell which sends the RRC connection reconfiguration message previously. If the cell sending the RRC message is the macro cell, it is optionally the macro cell which sends the RRC response message to the small cell.

### Case 2: Regarding C1 and Option 3 (with bearer splitting, including four alternatives 3A, 3B, 3C, and 3D)

In this Case 2, the small cell also acts as a role of configuring parameters for the small cell. For Option 3, one S1 bearer can be split into two radio bearers. For one kind of traffic, the UE will receive two different DRB-ToAddMods of the two cells respectively.

Step1: The same with Step1 in Case 1.

Step 2: Both the macro cell and the small cell should configure radio resources for this RB. In other words, the detailed configuration of PDCP, RLC, MAC and physical layers is determined based on the detailed UP protocol stack division.

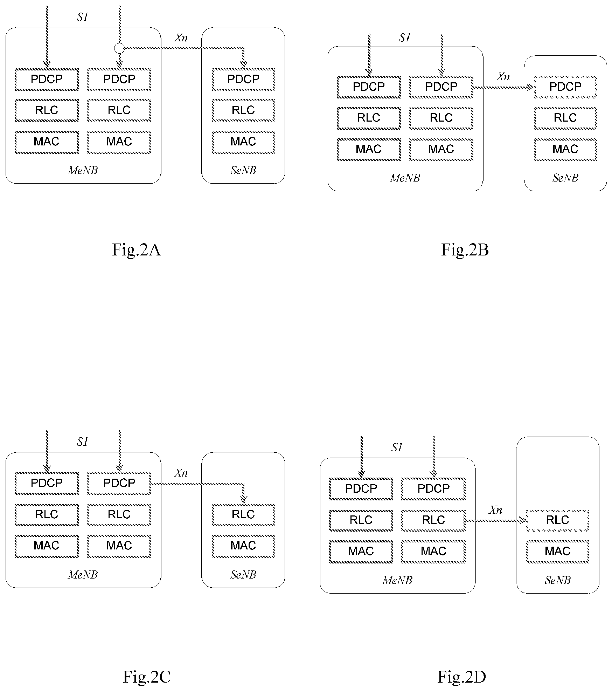

For Alternative 3A: S1-U terminates in MeNB + bearer splitting in MeNB + independent PDCPs for splitting bearers, as shown in Fig.2A, the small cell configures radio sources for a bearer branch at its location based on DRB-related information received from the macro cell via the Xn interface, the radio resource including the configuration of PDCP, RLC, MAC and physical layers. At the same time, for another bearer branch in the macro cell, the macro cell will configure the radio resources, including configuration of PDCP, RLC, MAC and physical layers.

For Alternative 3B: S 1-U terminates in MeNB + bearer splitting in MeNB + master-slave PDCPs for splitting bearers, as shown in Fig.2B, the small cell configures radio sources for a bearer branch passing by its location based on DRB-related information received from the macro cell via the Xn interface, the radio resource including configuration of RLC, MAC and physical layers. For the PDCP layer, the small cell and the macro cell will separately configure the necessary resources based on the detailed master-slave PDCP function, namely, PDCP configuration at the small cell and the macro cell for this bearer branch respectively.

At the same time, for another bearer branch in the macro cell, the macro cell will configure the radio resources, including configuration of PDCP, RLC, MAC and physical layers for the other bearer branch.

For alternative 3C: S1-U terminates in MeNB + bearer splitting in MeNB + independent RLCs for splitting bearers, as shown in Fig.2C, the small cell configures radio sources for a bearer branch passing by its location based on DRB-related information received from the macro cell via the Xn interface, the radio resource including configuration of RLC, MAC and physical layers. The macro cell is responsible for determining configuration of the PDCP layer for said bearer branch. At the same time, for another bearer branch in the macro cell, the macro cell will determine configuration for PDCP, RLC, MAC and physical layers for the other bearer.

For Alternative 3D: S1-U terminates in MeNB + bearer splitting in MeNB + master-slave RLCs for splitting bearers, as shown in Fig.2D, the small cell configures radio sources for a bearer branch passing by its location based on DRB-related information received from the macro cell via the Xn interface, the radio resource including configuration of MAC and physical layers. The macro cell is responsible for determining configuration of the PDCP layer for said bearer branch. For the RLC layer, the small cell and the macro cell will separately configure the necessary resources based on the detailed master-slave RLC function, namely, configuration of RLC at the small cell and the macro cell for this bearer branch respectively.

In addition, for another RB branch in the macro cell, the macro cell will configure radio resources for the other bearer branch, the radio resource including configuration of PDCP, RLC, MAC and physical layers.

Step3: The configuration information of relevant protocol layers regarding one bearer branch determined at the small cell is sent in a message to the macro cell.

For Alternative 3A: the same with Alternative 2A in Step 3 of Case1.

For Alternative 3B: the same with Alternative 2B in Step 3 of Case1.

For Alternative 3C: the same with Alternative 2C in Step 3 of Case1.

For Alternative 3D: the same with Alternative 2D in Step 3 of Case1.

In addition, if the message for the small cell is sent to the UE via the macro cell, or the RRC message for the small cell is created in the macro cell, a message including a time label and activation timer may be sent from the small cell to the macro cell. As stated above, the time label and activation timer can be expressed with SFN. Moreover, if the RRC package is sent to the UE by the macro cell, then a cell id of the small cell should be sent to the macro cell and then sent to the UE by it.

Step 4: The RRC entity in the macro cell may create the RRC package, i.e., the RRC connection reconfiguration message with RadioResourceConfigDedicated in it. The RadioResourceConfigDedicated will include drb-ToAddModList and drb-ToAddModList includes two drb-ToAddMods. One DRB is established in the macro cell and the other DRB is established in the small cell, that is, data on one DRB is transmitted through the macro cell and data on the other DRB is transmitted through the small cell. In addition, the two DRBs are mapped to one S1-bearer. The RRC package can be sent to the UE by the macro cell. Alternatively, the RRC package may also be sent from the macro cell to the small cell, and then the small cell may transmit the RRC message to the UE through its Layer2/1.

In an embodiment, if the RRC package is sent to the UE by the macro cell, the cell id of the small cell should be included in DRB-ToAddMod to indicate to the UE which cell the DRB will be transmitted through.

In another embodiment, for Option 3 of the user plane, the macro cell id and small cell id will be included in drb-ToAddMod of DRB separately to indicate that DRB will be established in the corresponding cell.

Optionally, the time label and activation timer from the small cell may be included in DRB-ToAddMod and sent to the UE. By these information and mechanisms, the UE and small cell are guaranteed to be in synchronization in use of new configured parameter.

Step5: After the user receiving the RRC connection reconfiguration message, it will send a RRC connection reconfiguration complete message to the cell which sends the RRC connection reconfiguration message. If said cell is the macro cell, the macro cell may optionally send this message to the small cell.

For Option 3, there is another option that one drb-ToAddMod can include two sets of configuration of individual layer such as PDCP, RLC and MAC layer, one set of configuration is for the DRB established in the macro cell and the other set is for the DRB established in the small cell. In addition, one indication may be added to indicate the drb-ToAddMod includes two sets of configuration.

For Option 3, the RRC connection reconfiguration message having RadioResourceConfigDedicated may be formed for the two DRBs respectively, and sent to the UE respectively via the corresponding cell.

### Case 3: For C2 and Option 2 (no bearer splitting, including four alternatives 2A, 2B, 2C, and 2D)

In this Case 2, the small cell also acts a role of configuring parameters for the small cell. Since there is a RRC entity in the small cell, it is not necessary to send the configuration information from the small cell to the macro cell, which is different from that in the case of C1. For example, the RRC entity in the small cell may create the RRC layer data and the RRC connection reconfiguration message may be sent to the UE by the small cell directly.
Step1:
   a. The same with Step1 in Case 1 and Case 2, i.e., the DRB-related information is received from the macro cell.
   b. Besides the DRB related information obtained or derived from the MME, the macro cell is also required to send the parameter configuration for the layers located in it as following:
      For Alternative 2A: the macro cell is not required to configure any parameter of the PDCP, RLC, MAC and physical layers;
      For Alternative 2B: the macro cell is responsible for configuring the necessary resources to the PDCP layer based on the detailed master-slave PDCP function and sending the configuration of the master PDCP layer to the small cell;
      For Alternative 2C: the macro cell is responsible for configuring the resources to the PDCP layer and sending the configuration information for the layer to the small cell; and
      For Alternative 2D: the macro cell is responsible for configuring the resources to the PDCP layer. In addition, for the RLC layer, the macro cell may configure the necessary resources based on the detailed master-slave RLC function, and then send the configuration information for the master RLC from the macro cell to the small cell.
Step 2: The small cell may configure radio resources based on the detailed UP protocol stack division so as to determine configuration of PDCP, RLC, MAC and physical layers for example. This is the same with Step 2 in Case 1.
Step 3: The RRC entity in the small cell may create a drb-ToAddMod including both the configuration information from the macro cell and the configuration information of itself. Eventually, the small cell creates a RRC package, i.e. a RRC connection reconfiguration message including RadioResourceConfigDedicated and sends this RRC message to the UE.
Step 4: After the UE receiving the RRC connection reconfiguration message, it will respond by sending a RRC connection reconfiguration complete message to the cell which sends the RRC connection reconfiguration message, for example, the macro cell or the small cell.

### Case 4: For C2 and Option 3 (with bearer splitting, including four alternatives 3A, 3B, 3C, and 3D)

In Case 4, the small cell also acts a role of configuring parameters for the small cell and has a RRC entity to create the RRC message. Accordingly, for the data bearer transmitted in the small cell, the procedure and situation is the same with Case 3. The difference lies in that the macro cell will also generate one drb-ToAddMod for transmitting the data bearer in the macro cell, and thereby the two DRBs are mapped to one S1 bearer.

### Case 5: For the case that S1-U terminates at both the macro cell and the small cell

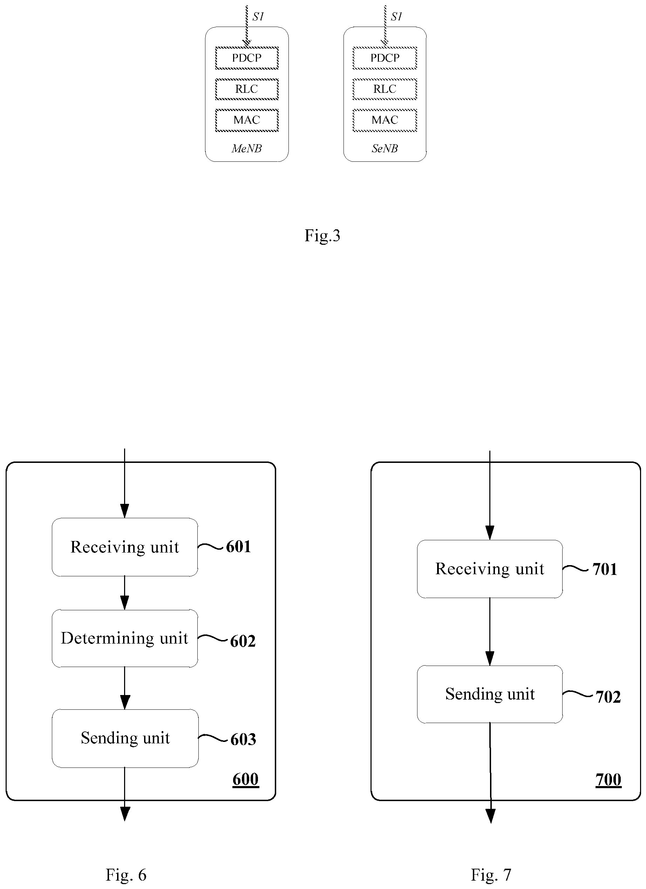

In this case, a core network ("CN") performs the data offloading, i.e., Alternative 1A: S1-U terminates in SeNB + independent PDCP, RLC, MAC and physical layers (no bearer splitting), as shown in the figure 3.

In Alternative 1A, the macro cell is responsible for configuring the configuration parameters for relevant protocol layers of the DRBs transmitted on it and the small cell is responsible for configuring the configuration parameters for the relevant protocol layers of the DRBs transmitted on it. As shown in Fig.3, the radio resource configuration covers a corresponding configuration of the PDCP, RLC, MAC and physical layers.

On the other hand, as only MeNB terminates at S1-MME, QoS parameters of the EPS bearer are received by the macro cell and the macro cell is required to forward the information to the small cell for establishment of the data bearer.
Step 1:
   Since only the macro cell terminates at S1-MME, this step is the same with Step 1 of Case 1. For example, the macro cell firstly sends to the small cell DRB related information in E-RAB SETUP REQUEST from the MME such as E-RAB to be Setup List and E-RAB To Be Setup Item IEs (E-RAB ID or E-RAB Level QoS Parameters). In an embodiment, the E-RAB SETUP REQUEST may be sent from MME to the small cell directly.
Step 2:
   The small cell is responsible for configuring parameters of the DRB transmitted on it. Specifically, the radio resource configuration includes configuration of PDCP, RLC, MAC and physical layers.

For C1:
Step3: The small cell sends the corresponding RRC message to the macro cell, and the message may include some parameters included in the *DRB-ToAddModList* message such *aseps-Bearerldentity, drb-Identity, pdcp-Config, rlc-Config, logicalChannelIdentity* and *logicalChannelConfig.* In addition, as stated above, if the RRC package is sent to the UE by the macro cell, the *DRB-ToAddModList* message may include a cell identifier (or cell id) of the small cell and synchronization information.
Step 4: The macro cell is responsible for creating a RRC package, i.e. RadioResourceConfigDedicated in the RRC connection reconfiguration message, and the RRC package may be sent to the UE by the macro cell. Optionally, the RRC package may also be sent to the UE by the small cell through layer 2 and layer 1.
Step5: After the UE receiving the RRC connection reconfiguration message, it will respond by sending a RRC connection reconfiguration complete message to the cell which sends the RRC connection reconfiguration message, e.g., the macro cell or the small cell, to accomplish the establishment of DRB under dual connectivity.

For C2:
Step 3: The macro cell and the small cell may create the RRC package in its RRC entity separately and send the RRC connection reconfiguration message to the UE separately.
Step 4: After the UE receiving the RRC connection reconfiguration message respectively from the macro cell and the small cell, it sends the RRC connection reconfiguration complete message respectively to the macro cell and the small cell so as to accomplish the establishment of DRB under dual connectivity.

Embodiments for establishing DRB in a radio communication system supporting multi-connectivity according to the present invention are described below with reference to the figures. By utilizing the above embodiments of the present invention, the data bearer may be established effectively under multi-connectivity, and rigid synchronization of the data bearer between the UE and the small base station may be ensured through synchronization setting.

Embodiments for establishing a signaling bearer in a radio communication system supporting multi-connectivity according to the present invention are described below in combination with the aforesaid cases and configuration.

In order to establish a signaling bearer, according to current specifications, parameters *srb-Identity, rlc-Config* and *logicalChannelConfig* should be configured. If the small cell is required to transmit a RRC connection reconfiguration including DRB-ToAddMod, it is necessary to establish SRB in the small cell first. To this end, the small cell should configure radio resources for the SRB based on the UP stack architecture. Exemplary configuring process is as follows:
A: Since the PDCP layer has default configuration for SRB, for the above-mentioned Alternatives 2A, 3A, 2B, 3B, 2C, and 3C, besides configuration of the PDCP layer, configurations about *srb-Identity, rlc-Config* and *logicalChannelConfig* should be completed in the small cell and sent by the small cell to the macro cell. Then, the macro cell creates a RRC connection reconfiguration message including the SRB-ToAddMod for the small cell and sends it to the UE.
B: for Alternatives 2D and 3D, namely, the cases in which the master RLC layer is deployed at the user plane protocol stack of the macro base station while the slave RLC layer is deployed at the user plane protocol stack of the small base station (as shown in Fig.1D and Fig.2D), parameters *srb-Identity* and *logicalChannelConfig* should be configured in the small cell except for other configurations. For the RLC layer, as stated above, the small cell may configure the necessary resources based on the detailed master-slave RLC function, and send the slave RLC layer configuration information to the macro cell. The macro cell also configures the necessary resources to the RLC layer based on the detailed master-slave RLC function. Eventually, the macro cell creates a RRC connection reconfiguration message including the SRB-ToAddMod for the small cell and sends it to the UE.
C: As stated above, the SRB-ToAddMod for the small cell is sent to the UE by the macro cell, synchronization information such as information of a time label and activation timer from the small cell also should be sent to the UE. By these synchronization information and mechanisms, the UE and the small cell are guaranteed to be in synchronization in use of new configured parameters.
   In addition, SRB-ToAddModList for the small cell may include a cell id of the small cell.
D: For Case 5, the procedure is the same with Alternatives 2A and 3A and therefore not be detailed again here.

According to an embodiment of the present invention, for a modification message of SRB, it may be created by the small cell and sent from the small cell to the UE via the RRC message.

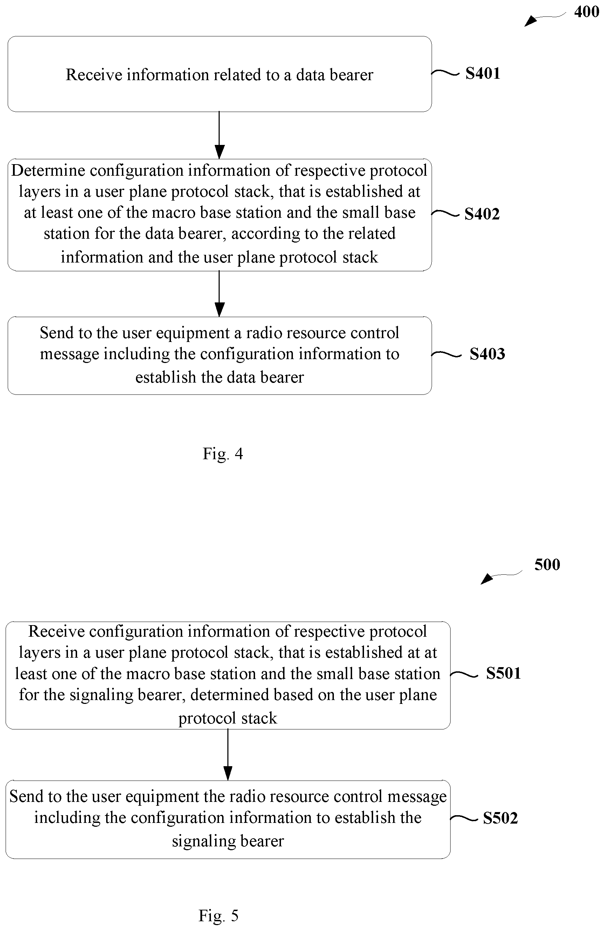

Fig.4 schematically shows a flow chart of a method 400 for establishing a data bearer in a radio communication system supporting multi-connectivity according to an embodiment of the present invention. The method 400 may be used to establish a data bearer in a radio communication system supporting multi-connectivity, wherein the radio communication system comprises a UE and at least two base stations connected to the UE, and the at least two base stations comprise at least one macro base station (e.g., MeNB shown in Figs.1A-1D and Figs. 2A-2D) and at least one small base station (e.g., SeNB shown in Figs. 1A-1D and Figs.2A-2D).

According to the method 400, at step S401, information related to the data bearer is received. After the information related to the data bearer is received, at step S402 of the method 400, configuration information of respective protocol layers in a user plane protocol stack, that is established at at least one of the macro base station and the small base station for the data bearer, is determined according to the related information and the user plane protocol stack. At step S403 of the method 400, a radio resource control message including the configuration information is sent to the UE to establish the data bearer.

Although not shown, in an embodiment, the user plane protocol stack established at the at least one of the macro base station and the small base station for the data bearer comprises a packet data convergence protocol layer, a radio link control layer, a media access control layer, and a physical layer.

In another embodiment, the macro base station is connected to a gateway to transmit data, and a bearer splitting operation is not performed in the macro base station (as shown in Figs. 1A-1D) or a bearer splitting operation is performed in the macro base station (as shown in Figs.2A-2D).

In a further embodiment, the bearer splitting operation is not performed in the macro base station, and the small base station comprises no radio resource control entity. According to the method 400, the configuration information of the respective protocol layers determined at the small base station is received and the radio resource control message is formed at the macro base station, wherein the radio resource control message includes configuration information determined at the small base station (e.g., configuration about the PDCP layer, RLC layer, MAC layer and physical layer) or includes both configuration information determined at the small base station and configuration information determined at the macro base station (for example, when in the PDCP master-slave mode or RCL layer master-slave mode, as shown in Figs. 1B and 1D), and the radio resource control message further includes an identifier of the small base station.

Take Fig.1A as an example, wherein the user plane protocol stack established at the small base station comprises a PDCP layer, RLC layer, MAC layer and physical layer. The method 400 may determine the configuration information of the PDCP layer, RLC layer, MAC layer and physical layer at the small base station according to the related information (e.g., DRB information).

Take Fig.1B as an example, wherein the user plane protocol stack established at the small base station comprises a slave PDCP layer, RLC layer, MAC layer and physical layer, the slave PDCP layer constituting a master-slave mode with the PDCP layer established for the data bearer in the macro base station, and the user plane protocol stack established at the macro base station comprises a master PDCP layer constituting a master-slave mode with the PDCP layer established for the data bearer in the small base station. The method 400 may determine the configuration information of the RLC layer, MAC layer and physical layer at the small base station according to the related information, and the configuration information of the slave PDCP layer according to the related information and based on the master-slave PDCP function, and the configuration information of the master PDCP layer at the macro base station according to the related information.

Take Fig.1C as an example, wherein the user plane protocol stack established at the small base station comprises an RLC layer, MAC layer and physical layer, and the user plane protocol stack established at the macro base station comprises a PDCP layer. The method 400 may determine the configuration information of the RLC layer, MAC layer and physical layer at the small base station according to the related information, and determine the configuration information of the PDCP layer at the macro base station according to the related information.

Take Fig.1D as an example, wherein the user plane protocol stack established at the small base station comprises a slave RLC layer, MAC layer and physical layer, the slave RLC layer constituting a master-slave mode with the RLC layer established for the data bearer in the macro base station, and the user plane protocol stack established at the macro base station comprises a PDCP layer and a maser RLC layer that constitutes a master-slave mode with the slave RLC layer established for the data bearer in the small base station. The method 400 may determine the configuration information of the MAC layer and physical layer at the small base station according to the related information, and determine the configuration information of the slave RLC layer according to the related information and based on the master-slave RLC function, and the configuration information of the PDCP layer at the macro base station and the configuration information of the master RLC layer at the macro base station according to the related information.

In the embodiments shown in Figs.1A-1D, since the small station comprises no RRC entity, the method 400 may receive at the macro base station the configuration information coming from the small base station and determined according to the related information, and send from the macro base station to the UE the RRC message of the data bearer included the configuration information determined at the small base station and the macro base station, so as to establish the data bearer, wherein the RRC message includes an identifier of the small base station. As stated above, to ensure synchronization, the method 400 may receive at the macro base station from the small base station synchronization information that enables the UE and the small base station to use the configuration information in synchronization, and send the synchronization information from the macro base station to the UE via the RRC message.

In another embodiment, sending the RRC message to the UE according to the method 400 comprises receiving at the macro base station a response (e.g., a RRC connection reconfiguration complete message) to the RRC message from the UE, and forwarding the response to the small base station. Alternatively, the method 400 may forward from the small base station to the UE the RRC message coming from the macro base station, and receive at the small base station the response to the RRC message from the UE.

In a further embodiment, the bearer splitting operation is not performed at the macro base station, and the small base station comprises the radio resource control entity. According to the method 400, the RRC message is formed at the small base station, wherein the RRC message includes the configuration information determined at the small base station or includes both configuration information determined at the small base station and configuration information determined at the macro base station and received from the macro base station. Then the method 400 sends from the small base station to the UE the RRC message including the configuration information and receives a response to the RRC message from the UE.

In an embodiment, the bearer splitting operation is performed in the macro base station to split the bearer into a first bearer branch transmitted through the small base station and a second bearer branch transmitted through the macro base station. The small base station comprises no RRC entity. The method 400 receives configuration information determined at the small base station for the first bearer branch and forms the RRC message at the macro base station, wherein the RRC message includes the configuration information determined at the small base station for the first bearer branch or includes both configuration information determined at the small base station and at the macro base station for the first bearer branch and configuration information determined at the macro base station for the second bearer branch, wherein the RRC message further includes an identifier of the small base station associated with the first bearer branch and an identifier of the macro base station associated with the second bearer branch.

In an embodiment, the bearer splitting operation is performed in the macro base station to split the bearer into a first bearer branch transmitted through the small base station and a second bearer branch transmitted through the macro base station. The small base station comprises no RRC entity. The method 400 may form the RRC message at the small base station, wherein the RRC message includes the configuration information determined for the first bearer branch or includes both configuration information determined for the first bearer branch and configuration information received from the macro base station and determined for the second bearer branch, wherein the configuration information determined for the first bearer branch is the configuration information determined at the small base station for the first bearer branch or includes both configuration information determined at the small base station and at the macro base station for the first bearer branch, and the RRC message further includes an identifier of the small base station associated with the first bearer branch and an identifier of the macro base station associated with the second bearer branch. Then the method 400 sends the RRC message from the small base station to the UE and receives a response to the RRC message from the UE.

Take Fig.2A as an example, wherein the user plane protocol stack established at the small base station comprises the PDCP layer, RLC layer, MAC layer and physical layer for bearing the split first bearer branch, and the user plane protocol stack established at the macro base station comprises the PDCP layer, RLC layer, MAC layer and physical layer for bearing the split second bearer branch. The method 400 may determine the configuration information of the PDCP layer, RLC layer, MAC layer and physical layer for the first bearer branch at the small base station according to the related information, and the method 400 determines the configuration information of the PDCP layer, RLC layer, MAC layer and physical layer for the second bearer branch at the macro base station according to the related information.

Take Fig.2B as an example, wherein the user plane protocol stack established at the small base station comprises a slave PDCP layer, RLC layer, MAC layer and physical layer that are used to bear the split first bearer branch, the slave PDCP layer constituting a master-slave mode with the PDCP layer established for the data bearer in the macro base station, and the user plane protocol stack established at the macro base station comprises a PDCP layer, RLC layer, MAC layer and physical layer for bearing the split second bearer branch and a master PDCP layer that constitutes a master-slave mode with the PDCP layer established for the first bearer branch in the small base station. The method 400 may determine the configuration information of the RLC layer, MAC layer and physical layer for the first bearer branch at the small base station according to the related information, and determine the configuration information of the slave PDCP layer according to the related information and based on the master-slave PDCP function. The method 400 further determines the configuration information of the PDCP layer, RLC layer, MAC layer and physical layer for the second bearer branch at the macro base station according to the related information, and determines the configuration information of the master PDCP layer for the first bearer branch according to the related information and based on the master-slave PDCP function.

Take Fig.2C as an example, wherein the user plane protocol stack established at the small base station comprises an RLC layer, MAC layer and physical layer for bearing the split first bearer branch, and the user plane protocol stack established at the macro base station comprises a PDCP layer, RLC layer, MAC layer and physical layer for bearing the split second bearer branch, and the PDCP layer established for the first bearer branch in the small base station. The method 400 may determine the configuration information of the RLC layer, MAC layer and physical layer for the first bearer branch at the small base station according to the related information, and determine the configuration information of the PDCP layer, RLC layer, MAC layer and physical layer for the second bearer branch at the macro base station according to the related information, and determine the configuration information of the PDCP layer for the first bearer branch according to the related information.

Take Fig.2D as an example, wherein the user plane protocol stack established at the small base station comprises a slave RLC layer, MAC layer and physical layer that are used to bear the split first bearer branch, the slave PDCP layer constituting a master-slave mode with the RLC layer established for the data bearer in the macro base station, and the user plane protocol stack established at the macro base station comprises a PDCP layer, RLC layer, MAC layer and physical layer for bearing the split second bearer branch, and a maser RLC layer that constitutes a master-slave mode with the RLC layer established for the first bearer branch in the small base station and the PDCP layer for the first bearer branch. The method 400 may determine the configuration information of the MAC layer and physical layer for the first bearer branch at the small base station according to the related information, and determine the configuration information of the slave RLC layer at the small base station according to the related information and based on the master-slave RLC function, and determine the configuration information of the PDCP layer, RLC layer, MAC layer and physical layer for the second bearer branch at the macro base station according to the related information, and determine the configuration information of the master RLC layer for the first bearer branch according to the related information, the configuration information of the PDCP layer and based on the master-slave RLC function.

In the various solutions about bearer splitting above, since the small base station comprises an RRC entity, the method 400 may receive at the macro base station the configuration information determined for the second bearer branch according to the related information, the configuration information determined for the first bearer branch, and send from the small base station to the UE the RRC message including the configuration information determined for the first and second bearer branches at the small base station and the macro base station, to establish the data bearer. Alternatively, the corresponding RRC message including the configuration information determined for the first bearer branch and the configuration information determined for the second bearer branch is respectively sent from the small base station and the macro base station to the UE, to establish the data bearer.

In an embodiment, the radio resource control message is a radio resource control connection reconfiguration message, and in the radio resource control connection reconfiguration message: the configuration information for the first bearer branch and the second bearer branch is respectively included in two drb-ToAddMods and is respectively identified with identifiers of the small base station and the macro base station, and the two drb-ToADDMods are included in the same drb-ToAddModList, or the configuration information for the first bearer branch and the second bearer branch is respectively included in the same drb-ToAddMod and is respectively identified with identifiers of the small base station and the macro base station, and the drb-ToAddMod is included in the same drb-ToAddModList.

In an embodiment, the macro base station and the small base station are connected to a gateway to transmit data, and a bearer splitting operation is not performed in the macro base station.

In a further embodiment, the small base station comprises no RRC entity and the method 400 includes receiving from the small base station configuration information determined from the related information and sending from the macro base station to the UE the RRC message including the configuration information determined at the small base station, to establish the data bearer, wherein the RRC message further includes an identifier of the small base station and synchronization information enabling the UE and the small base station to use the configuration information in synchronization, and receiving a response to the RRC message from the UE and forwarding the response to the small base station, the response being for example a RRC connection reconfiguration complete message as exemplified above. Alternatively, the method 400 sends the configuration information determined at the small base station to the macro base station, receives from the macro base station the RRC message including the configuration information determined at the small base station and the macro base station, sends the RRC message from the small base station to the UE via layer 2 and layer 1, and receives a response to the RRC message from the UE.

In a further embodiment, the small base station comprises the RRC entity, and the method 400 sends from the small base station to the UE the RRC message including the configuration information determined at the small base station according to the related information and receives from the UE the response to the radio resource control message.

As can be seen from the description with reference to Fig.4, the macro base station and the small base station of the present invention exchanges, via the interface, configuration of various corresponding layers for the user plane protocol stack, and it is determined that the macro base station or the small base station sends the corresponding configuration information to the UE according to whether the small base station is provided with the RRC entity. If the macro base station sends the RRC message including the configuration information to the UE, the identifier of the small base station should be included in the RRC message so that the UE can identify the configuration information coming from different cells so as to establish corresponding data connections for different cells.

Fig.5 schematically shows a flow chart of a method 500 for establishing a signaling bearer in a radio communication system supporting multi-connectivity according to an embodiment of the present invention, wherein the radio communication system comprises a UE and at least two base stations connected to the UE, and the at least two base stations comprise at least one macro base station and at least one small base station. The method 500 comprises receiving at step S501 configuration information of respective protocol layers in a user plane protocol stack , that is established at at least one of the macro base station and the small base station for the signaling bearer, determined based on the user plane protocol stack. At step S502, the method 500 comprises sending to the UE the RRC message including the configuration information to establish the signaling bearer.

In an embodiment, configuration of respective protocol layers in the user plane protocol stack that is established at the at least one of the macro base station and the small base station for the signaling bearer comprises configuration for a RLC layer, a MAC layer and a physical layer.

In another embodiment, the method 500 comprises receiving configuration information of respective protocol layers determined at the small base station and forming the RRC information at the macro base station, wherein the RRC message includes the configuration information determined at the small base station or includes both the configuration information determined at the small base station and configuration information determined at the macro base station.

In a further embodiment, the RRC message further includes synchronization information enabling the UE and the small base station to use the configuration information in synchronization and an identifier of the small base station. In a further embodiment, a RRC message for modifying the signaling bearer is formed at the small base station and sent to the user equipment.

As can be seen from the description with reference to Fig.5, in the present invention, the configuration information for the signaling bearer is sent from the macro base station to the UE, and in sending the RRC message including the configuration information, synchronization information (e.g., a time label and activation timer, or information of absolute time length) is included so as to implement establishment of effective signaling bearer between the UE and the small base station and provide the user with good signaling service and communication service.

Fig.6 schematically shows a block diagram of an apparatus 700 for establishing a data bearer in a radio communication system supporting multi-connectivity according to an embodiment of the present invention. As shown in Fig.6, the apparatus 600 is configured to establish a data bearer in a radio communication system supporting multi-connectivity, wherein the radio communication system comprises a UE and at least two base stations connected to the UE, and the at least two base stations comprise at least one macro base station and at least one small base station. The apparatus 600 comprises a receiving unit 601 configured to receive information related to the data bearer, a determining unit 602 configured to determine configuration information of respective protocol layers in a user plane protocol stack, that is established at at least one of the macro base station and the small base station for the data bearer, according to the related information and the user plane protocol stack, and a sending unit 603 configured to send an RRC message including the configuration information to the UE to establish the data bearer. As can be seen, the apparatus 600 of Fig.6 may implement the method shown in Fig.4, and although not further shown, the apparatus 600 may comprise more functional units to implement various embodiments described with reference to the method 400 shown in Fig.4. Furthermore, the apparatus 600 may be implemented at the macro base station or the small base station or implemented in the macro base station or the small base station, and may be flexibly arranged at the macro base station or the small base station depending on difference of subjects performing the method and functions, to implement the establishment of data bearer.

Fig.7 schematically shows a block diagram of an apparatus 700 for establishing a signaling bearer in a radio communication system supporting multi-connectivity according to an embodiment of the present invention. The apparatus 700 is configured to establish a data bearer in a radio communication system supporting multi-connectivity, wherein the radio communication system comprises a UE and at least two base stations connected to the UE, and the at least two base stations comprise at least one macro base station and at least one small base station. The apparatus 700 comprises a receiving unit 701 configured to receive configuration information of respective protocol layers in a user plane protocol stack , that is established at at least one of the macro base station and the small base station for the signaling bearer, determined based on the user plane protocol stack, and a sending unit 703 configured to send an RRC message including the configuration information to the UE to establish the signaling bearer. As can be seen, the apparatus 700 of Fig.7 may implement the method shown in Fig.5, and although not further shown, the apparatus 700 may comprise more functional units to implement various embodiments described with reference to the method 500 shown in Fig.5. Furthermore, the apparatus 700 may be implemented at the macro base station or in the macro base station, and may be flexibly arranged at the macro base station or the small base station depending on difference of subjects performing the method and functions, to implement the establishment of data bearer.

To conclude, various embodiments of the present invention have been described in detail with reference to the accompanying drawings. Those skilled in the art would appreciate that embodiments of the present invention may be implemented in hardware, software, firmware, module or a combination thereof, or the present invention may be embodied on a computer program product set on a signal bearer medium available to any suitable data processing system. Such signal bearing medium may be a transmission medium or a recordable medium for computer-readable information, including a magnetic medium, an optical medium, or other suitable medium. Examples of recordable mediums include: a magnetic disk or floppy disk in a hard disk driver, an optical disk for a CD driver, a magnetic tape, and other medium that can be contemplated by the skilled in the art. The skilled in the art should understand that any communication terminal with an appropriate programming apparatus can implement steps of the method of the present invention as embodied in the program product.

It should be noted that in order to make the present invention more comprehensible, the above description omits some more specific technical details which are known to the skilled in the art but may be essential to implement the present invention.

## Claims

1. A method (400) for establishing a data bearer in a radio communication system supporting multi-connectivity, wherein the radio communication system comprises a user equipment and at least two base stations connected to the user equipment, the at least two base stations comprise at least one macro base station and at least one small base station, the method comprising:
Receiving (S401) information related to the data bearer;
determining (S402) configuration information of respective protocol layers in a user plane protocol stack, that is established at at least one of the macro base station and the small base station for the data bearer, according to the related information and the user plane protocol stack; and
sending (S403) to the user equipment a radio resource control message including the configuration information to establish the data bearer;
wherein the user plane protocol stack established at the at least one of the macro base station and the small base station for the data bearer comprises a packet data convergence protocol layer, a radio link control layer, a media access control layer, and a physical layer;
wherein the macro base station is connected to a gateway to transmit data, and the small base station comprises no radio resource control entity, the method further comprising:
receiving configuration information of the respective protocol layers determined at the small base station; and
forming the radio resource control message at the macro base station, wherein the radio resource control message includes configuration information determined at the small base station or includes both configuration information determined at the small base station and configuration information determined at the macro base station, and the radio resource control message further includes an identifier of the small base station; and the method **characterized by** the following steps,
sending (S403) from the macro base station to the user equipment the radio resource control message, the radio resource control message including synchronization information enabling the user equipment and the small base station to use the configuration information in synchronization, the synchronization information comprising an activation time like mechanism; and
receiving at the macro base station a response to the radio resource control message from the user equipment and forwarding the response to the small base station.

2. The method according to claim 1, wherein activation time like mechanism comprises a time label and an activation timer or an information of absolute time length.

3. The method according to claim 1 or 2, wherein the time label and the activation timer is expressed with a system frame number, SFN, and/or **is** included in DRB-ToAddMod.

4. The method (400) according to claim 1, wherein the macro base station is connected to a gateway to transmit data, a bearer splitting operation is performed in the macro base station to split the bearer into a first bearer branch transmitted through the small base station and a second bearer branch transmitted through the macro base station, and the small base station comprises no radio resource control entity, the method further comprising:
receiving configuration information determined at the small base station for the first bearer branch; and
forming the radio resource control message at the macro base station, wherein the radio resource control message includes the configuration information determined at the small base station for the first bearer branch, or includes both configuration information determined at the small base station and at the macro base station for the first bearer branch and configuration information determined at the macro base station for the second bearer branch, wherein the radio resource control message further includes an identifier of the small base station associated with the first bearer branch and an identifier of the macro base station associated with the second bearer branch.

5. The method (400) according to claim 1, wherein the macro base station is connected to a gateway to transmit data, a bearer splitting operation is not performed in the macro base station, and the small base station comprises a radio resource control entity, the method further comprising:
forming the radio resource control message at the small base station, wherein the radio resource control message includes configuration information determined at the small base station or includes both configuration information determined at the small base station and configuration information determined at the macro base station and received from the macro base station;
sending from the small base station to the user equipment the radio resource control message including the configuration information; and
receiving a response to the radio resource control message from the user equipment.

6. The method (400) according to claim 1, wherein the macro base station is connected to a gateway to transmit data, a bearer splitting operation is performed in the macro base station to split the bearer into a first bearer branch transmitted through the small base station and a second bearer branch transmitted through the macro base station, and the small base station comprises a radio resource control entity, the method further comprising:
forming the radio resource control message at the small base station, wherein the radio resource control message includes configuration information determined for the first bearer branch or includes both configuration information determined for the first bearer branch and configuration information determined for the second bearer branch and received from the macro base station, wherein the configuration information determined for the first bearer branch is the configuration information determined at the small base station for the first bearer branch or includes both configuration information determined at the small base station and at the macro base station for the first bearer branch, and the radio resource control message further includes an identifier of the small base station associated with the first bearer branch and an identifier of the macro base station associated with the second bearer branch;
sending the radio resource control message from the small base station to the user equipment; and
receiving a response to the radio resource control message from the user equipment.

7. The method (400) according to claim 4 or 6, wherein the radio resource control message is a radio resource control connection reconfiguration message, and in the radio resource control connection reconfiguration message:
the configuration information for the first bearer branch and the second bearer branch is respectively included in two drb-ToAddMods and is respectively identified with identifiers of the small base station and the macro base station, and the two drb-ToADDMods are included in the same drb-ToAddModList; or
the configuration information for the first bearer branch and the second bearer branch is respectively included in the same drb-ToAddMod and is respectively identified with identifiers of the small base station and the macro base station, and the drb-ToAddMod is included in the same drb-ToAddModList.

8. The method (400) according to claim 1, wherein the macro base station and the small base station are connected to a gateway to transmit data, a bearer splitting operation is not performed in the macro base station, and the small base station comprises no radio resource control entity, and the method further comprises:
receiving from the small base station configuration information determined from the related information;
sending from the macro base station to the user equipment the radio resource control message including the configuration information determined at the small base station, to establish the data bearer, wherein the radio resource control message further includes an identifier of the small base station and synchronization information enabling the user equipment and the small base station to use the configuration information in synchronization; and
receiving a response to the radio resource control message from the user equipment and forwarding the response to the small base station;
or,
sending the configuration information determined at the small base station to the macro base station;
receiving from the macro base station the radio resource control message including the configuration information determined at the small base station and the macro base station;
sending the radio resource control message from the small base station to the user equipment; and
receiving a response to the radio resource control message from the user equipment.

9. The method according to claim 1, wherein the macro base station and the small base station are connected to a gateway to transmit data, a bearer splitting operation is not performed in the macro base station, and the small base station comprises a radio resource control entity, and the method further comprises:
sending from the small base station to the user equipment the radio resource control message including configuration information determined by the small base station according to the related information; and
receiving a response to the radio resource control message from the user equipment.

10. A method (500) for establishing a signaling bearer in a radio communication system supporting multi-connectivity, wherein the radio communication system comprises a user equipment and at least two base stations connected to the user equipment, the at least two base stations comprise at least one macro base station and at least one small base station, the method comprising:
receiving (S501) configuration information of respective protocol layers in a user plane protocol stack, that is established at at least one of the macro base station and the small base station for the signaling bearer, determined based on the user plane protocol stack; and
sending (S502) to the user equipment the radio resource control message including the configuration information to establish the signaling bearer; the method **characterized in that** the radio resource control message further includes synchronization information enabling the user equipment and the small base station to use the configuration information in synchronization and an identifier of the small base station, and a radio resource control message for modifying the signaling bearer is formed at the small base station and sent to the user equipment, the synchronization information comprising an activation time like mechanism.

11. The method (500) according to claim 10, wherein configuration of respective protocol layers in the user plane protocol stack that is established at the at least one of the macro base station and the small base station for the signaling bearer comprises configuration for a radio link control layer, a media access control layer, and a physical layer, the method further comprising:
receiving configuration information of respective protocol layers determined at the small base station; and
forming the radio resource control information at the macro base station, wherein the radio resource control message includes configuration information determined at the small base station or includes both configuration information determined at the small base station and configuration information determined at the macro base station.

12. An apparatus (600) for establishing a data bearer in a radio communication system supporting multi-connectivity, wherein the radio communication system comprises a user equipment and at least two base stations connected to the user equipment, the at least two base stations comprise at least one macro base station and at least one small base station, the apparatus comprising:
a receiving unit (601) configured to receive information related to the data bearer;
a determining unit (602) configured to determine configuration information of respective protocol layers in a user plane protocol stack, that is established at at least one of the macro base station and the small base station for the data bearer, according to the related information and the user plane protocol stack; and
a sending unit (603) configured to send to the user equipment a radio resource control message including the configuration information to establish the data bearer; and the apparatus **characterized in that** the radio resource control message further includes synchronization information enabling the user equipment and the small base station to use the configuration information in synchronization and an identifier of the small base station, and a radio resource control message for modifying the signaling bearer is formed at the small base station and sent to the user equipment, the synchronization information comprising an activation time like mechanism.

13. An apparatus (700) for establishing a signaling bearer in a radio communication system supporting multi-connectivity, wherein the radio communication system comprises a user equipment and at least two base stations connected to the user equipment, the at least two base stations comprise at least one macro base station and at least one small base station, the apparatus comprising:
a receiving unit (701) configured to receive configuration information of respective protocol layers in a user plane protocol stack, that is established at at least one of the macro base station and the small base station for the signaling bearer, determined based on the user plane protocol stack; and
a sending unit (702) configured to send to the user equipment a radio resource control message including the configuration information to establish the signaling bearer; and the apparatus **characterized in that** the radio resource control message further includes synchronization information enabling the user equipment and the small base station to use the configuration information in synchronization and an identifier of the small base station, and a radio resource control message for modifying the signaling bearer is formed at the small base station and sent to the user equipment, the synchronization information comprising an activation time like mechanism.

## Patentansprüche

1. Verfahren (400) zur Herstellung eines Datenträgers in einem Funkkommunikationssystem, das Multikonnektivität unterstützt, wobei das Funkkommunikationssystem ein Benutzergerät und mindestens zwei mit dem Benutzergerät verbundene Basisstationen umfasst, wobei die mindestens zwei Basisstationen mindestens eine Makrobasisstation und mindestens eine kleine Basisstation umfassen, wobei das Verfahren umfasst:
Empfangen (S401) von Informationen bezüglich des Datenträgers;
Bestimmen (S402) von Konfigurationsinformationen der betreffenden Protokollschichten in einem Protokollstapel auf der Benutzerebene, der auf mindestens einer von der Makrobasisstation und der kleinen Basisstation für den Datenträger eingerichtet ist, gemäß den zugehörigen Informationen und dem Protokollstapel auf der Benutzerebene; und
Senden (S403) einer Funkressourcensteuerungsnachricht, die die Konfigurationsinformationen zum Herstellen des Datenträgers enthält, an das Benutzergerät;
wobei der Protokollstapel der Benutzerebene, der mindestens auf einer von der Makrobasisstation und der kleinen Basisstation für den Datenträger hergestellt ist, eine Paketdaten-Konvergenz-Protokollschicht, eine Funkverbindungssteuerungsschicht, eine Medienzugriffssteuerungsschicht und eine physikalische Schicht umfasst;
wobei die Makrobasisstation mit einem Gateway verbunden ist, um Daten zu übertragen, und die kleine Basisstation keine Funkressourcensteuerungseinheit umfasst, wobei das Verfahren ferner umfasst:
Empfangen von Konfigurationsinformationen der betreffenden Protokollschichten, die auf der kleinen Basisstation bestimmt wurden; und
Bilden der Funkressourcensteuerungsnachricht auf der Makrobasisstation, wobei die Funkressourcensteuerungsnachricht Konfigurationsinformationen, die auf der kleinen Basisstation bestimmt wurden, oder sowohl Konfigurationsinformationen, die auf der kleinen Basisstation bestimmt wurden, als auch Konfigurationsinformationen, die auf der Makrobasisstation bestimmt wurden, enthält, und die Funkressourcensteuerungsnachricht ferner eine Kennung der kleinen Basisstation enthält, und das Verfahren durch die folgenden Schritte gekennzeichnet ist,
Senden (S403) der Funkressourcensteuerungsnachricht von der Makrobasisstation an das Benutzergerät, wobei die Funkressourcensteuerungsnachricht Synchronisationsinformationen enthält, die es dem Benutzergerät und der kleinen Basisstation ermöglichen, die Konfigurationsinformationen synchron zu verwenden, wobei die Synchronisationsinformationen einen aktivierungszeitähnlichen Mechanismus umfassen; und
Empfangen einer Antwort auf die Funkressourcensteuerungsnachricht vom Benutzergerät auf der Makrobasisstation und Weiterleiten der Antwort an die kleine Basisstation.

2. Verfahren nach Anspruch 1, wobei der aktivierungszeitähnliche Mechanismus eine Zeitmarke und einen Aktivierungszeitgeber oder eine Information absoluter Zeitlänge umfasst.

3. Verfahren nach Anspruch 1 oder 2, wobei die Zeitmarke und der Aktivierungszeitgeber mit einer Systemrahmennummer, SFN, ausgedrückt wird und/oder in DRB-ToAddMod enthalten ist.

4. Verfahren (400) nach Anspruch 1, wobei die Makrobasisstation mit einem Gateway verbunden ist, um Daten zu übertragen, eine Trägeraufteilungsoperation in der Makrobasisstation durchgeführt wird, um den Träger in einen ersten Trägerzweig, der durch die kleine Basisstation übertragen wird, und einen zweiten Trägerzweig, der durch die Makrobasisstation übertragen wird, aufzuteilen, und die kleine Basisstation keine Funkressourcensteuerungseinheit umfasst, wobei das Verfahren ferner umfasst:
Empfangen von Konfigurationsinformationen, die auf der kleinen Basisstation für den ersten Trägerzweig bestimmt wurden; und
Bilden der Funkressourcensteuerungsnachricht auf der Makrobasisstation, wobei die Funkressourcensteuerungsnachricht die auf der kleinen Basisstation für den ersten Trägerzweig bestimmten Konfigurationsinformationen enthält oder sowohl auf der kleinen Basisstation und auf der Makrobasisstation für den ersten Trägerzweig bestimmte Konfigurationsinformationen als auch auf der Makrobasisstation bestimmte Konfigurationsinformationen für den zweiten Trägerzweig enthält, wobei die Funkressourcensteuerungsnachricht ferner eine Kennung der dem ersten Trägerzweig zugeordneten kleinen Basisstation und eine Kennung der dem zweiten Trägerzweig zugeordneten Makrobasisstation enthält.

5. Verfahren (400) nach Anspruch 1, wobei die Makrobasisstation mit einem Gateway verbunden ist, um Daten zu übertragen, eine Trägeraufteilungsoperation in der Makrobasisstation nicht durchgeführt wird und die kleine Basisstation eine Funkressourcensteuerungseinheit umfasst, wobei das Verfahren ferner umfasst:
Bilden der Funkressourcensteuerungsnachricht auf der kleinen Basisstation, wobei die Funkressourcensteuerungsnachricht Konfigurationsinformationen enthält, die auf der kleinen Basisstation bestimmt wurden, oder sowohl Konfigurationsinformationen, die auf der kleinen Basisstation bestimmt wurden, als auch Konfigurationsinformationen, die auf der Makrobasisstation bestimmt und von der Makrobasisstation empfangen wurden, enthält;
Senden der Funkressourcensteuerungsnachricht, die die Konfigurationsinformationen enthält, von der kleinen Basisstation an das Benutzergerät; und
Empfangen einer Antwort auf die Funkressourcensteuerungsnachricht vom Benutzergerät.

6. Verfahren (400) nach Anspruch 1, wobei die Makrobasisstation mit einem Gateway verbunden ist, um Daten zu übertragen, eine Trägeraufteilungsoperation in der Makrobasisstation durchgeführt wird, um den Träger in einen ersten Trägerzweig, der durch die kleine Basisstation übertragen wird, und einen zweiten Trägerzweig, der durch die Makrobasisstation übertragen wird, aufzuteilen, und die kleine Basisstation eine Funkressourcensteuerungseinheit umfasst, wobei das Verfahren ferner umfasst:
Bilden der Funkressourcensteuerungsnachricht auf der kleinen Basisstation, wobei die Funkressourcensteuerungsnachricht Konfigurationsinformationen enthält, die für den ersten Trägerzweig bestimmt sind, oder sowohl Konfigurationsinformationen, die für den ersten Trägerzweig bestimmt sind, als auch Konfigurationsinformationen, die für den zweiten Trägerzweig bestimmt sind und von der Makrobasisstation empfangen werden, enthält, wobei die für den ersten Trägerzweig bestimmten Konfigurationsinformationen die auf der kleinen Basisstation für den ersten Trägerzweig bestimmten Konfigurationsinformationen sind oder sowohl auf der kleinen Basisstation als auch auf der Makrobasisstation für den ersten Trägerzweig bestimmte Konfigurationsinformationen enthalten, und die Funkressourcensteuerungsnachricht ferner eine Kennung der dem ersten Trägerzweig zugeordneten kleinen Basisstation und eine Kennung der dem zweiten Trägerzweig zugeordneten Makrobasisstation enthält;
Senden der Funkressourcensteuerungsnachricht von der kleinen Basisstation an das Benutzergerät; und
Empfangen einer Antwort auf die Funkressourcensteuerungsnachricht vom Benutzergerät.

7. Verfahren (400) nach Anspruch 4 oder 6, wobei die Funkressourcensteuerungsnachricht eine Funkressourcensteuerungsverbindungs-Rekonfigurationsnachricht ist, und in der Funkressourcensteuerungsverbindungs-Rekonfigurationsnachricht:
die Konfigurationsinformationen für den ersten Trägerzweig und den zweiten Trägerzweig jeweils in zwei drb-ToAddMods enthalten sind und jeweils mit Kennungen der kleinen Basisstation und der Makrobasisstation gekennzeichnet sind und die beiden drb-ToADDMods in derselben drb-ToAddModList enthalten sind; oder
die Konfigurationsinformationen für den ersten Trägerzweig und den zweiten Trägerzweig jeweils in demselben drb-ToAddMod enthalten sind und jeweils mit den Kennungen der kleinen Basisstation und der Makrobasisstation identifiziert werden, und der drb-ToAddMod in derselben drb-ToAddModList enthalten ist.

8. Verfahren (400) nach Anspruch 1, wobei die Makrobasisstation und die kleine Basisstation mit einem Gateway verbunden sind, um Daten zu übertragen, wobei in der Makrobasisstation keine Trägeraufteilungsoperation durchgeführt wird und die kleine Basisstation keine Funkressourcensteuerungseinheit umfasst, und das Verfahren ferner umfasst:
Empfangen von Konfigurationsinformationen von der kleinen Basisstation, die aus den zugehörigen Informationen ermittelt wurden;
Senden der Funkressourcensteuerungsnachricht, die die auf der kleinen Basisstation bestimmten Konfigurationsinformationen enthält, von der Makrobasisstation an das Benutzergerät, um den Datenträger zu herzustellen, wobei die Funkressourcensteuerungsnachricht ferner eine Kennung der kleinen Basisstation und Synchronisationsinformationen enthält, die es dem Benutzergerät und der kleinen Basisstation ermöglichen, die Konfigurationsinformationen synchron zu verwenden; und
Empfangen einer Antwort auf die Funkressourcensteuerungsnachricht vom Benutzergerät und Weiterleiten der Antwort an die kleine Basisstation;
oder
Senden der auf der kleinen Basisstation bestimmten Konfigurationsinformationen an die Makrobasisstation;
Empfangen der Funkressourcensteuerungsnachricht, die die auf der kleinen Basisstation und der Makrobasisstation bestimmten Konfigurationsinformationen enthält, von der Makrobasisstation;
Senden der Funkressourcensteuerungsnachricht von der kleinen Basisstation an das Benutzergerät; und
Empfangen einer Antwort auf die Funkressourcensteuerungsnachricht vom Benutzergerät.

9. Verfahren nach Anspruch 1, wobei die Makrobasisstation und die kleine Basisstation mit einem Gateway verbunden sind, um Daten zu übertragen, wobei in der Makrobasisstation keine Trägeraufteilungsoperation durchgeführt wird und die kleine Basisstation eine Funkressourcensteuerungseinheit umfasst, und das Verfahren ferner umfasst:
Senden der Funkressourcensteuerungsnachricht, die die durch die kleine Basisstation gemäß den zugehörigen Informationen bestimmten Konfigurationsinformationen enthält, von der kleinen Basisstation an das Benutzergerät; und
Empfangen einer Antwort auf die Funkressourcensteuerungsnachricht vom Benutzergerät.

10. Verfahren (500) zur Herstellung eines Signalisierungsträgers in einem Funkkommunikationssystem, das Multikonnektivität unterstützt, wobei das Funkkommunikationssystem ein Benutzergerät und mindestens zwei mit dem Benutzergerät verbundene Basisstationen umfasst, wobei die mindestens zwei Basisstationen mindestens eine Makrobasisstation und mindestens eine kleine Basisstation umfassen, wobei das Verfahren umfasst:
Empfangen (S501) von Konfigurationsinformationen der betreffenden Protokollschichten in einem Protokollstapel auf der Benutzerebene, der auf mindestens einer von der Makrobasisstation und der kleinen Basisstation für den Signalisierungsträger hergestellt ist, gemäß Bestimmung basierend auf dem Protokollstapel der Benutzerebene; und
Senden (S502) der Funkressourcensteuerungsnachricht, die die Konfigurationsinformationen zur Einrichtung des Signalisierungsträgers enthält, an das Benutzergerät; wobei das Verfahren **dadurch gekennzeichnet ist,**
**dass** die Funkressourcensteuerungsnachricht ferner Synchronisationsinformationen, die es dem Benutzergerät und der kleinen Basisstation ermöglichen, die Konfigurationsinformationen synchron zu verwenden, und eine Kennung der kleinen Basisstation enthält, und eine Funkressourcensteuerungsnachricht zum Modifizieren des Signalisierungsträgers auf der kleinen Basisstation gebildet und an das Benutzergerät gesendet wird, wobei die Synchronisationsinformationen einen aktivierungszeitähnlichen Mechanismus umfassen.

11. Verfahren (500) nach Anspruch 10, wobei die Konfiguration der betreffenden Protokollschichten im Protokollstapel der Benutzerebene, der auf mindestens einer von der Makrobasisstation und der kleinen Basisstation für den Signalisierungsträger hergestellt ist, eine Konfiguration für eine Funkverbindungssteuerungsschicht, eine Medienzugriffssteuerungsschicht und eine physikalische Schicht umfasst, wobei das Verfahren ferner umfasst:
Empfangen von Konfigurationsinformationen der betreffenden Protokollschichten, die auf der kleinen Basisstation bestimmt wurden; und
Bilden der Funkressourcensteuerungsinformationen auf der Makrobasisstation, wobei die Funkressourcensteuerungsnachricht Konfigurationsinformationen, die auf der kleinen Basisstation bestimmt wurden, oder sowohl Konfigurationsinformationen, die auf der kleinen Basisstation bestimmt wurden, als auch Konfigurationsinformationen, die auf der Makrobasisstation bestimmt wurden, enthält.

12. Vorrichtung (600) zur Herstellung eines Datenträgers in einem Funkkommunikationssystem, das Multikonnektivität unterstützt, wobei das Funkkommunikationssystem ein Benutzergerät und mindestens zwei mit dem Benutzergerät verbundene Basisstationen umfasst, wobei die mindestens zwei Basisstationen mindestens eine Makrobasisstation und mindestens eine kleine Basisstation umfassen, wobei die Vorrichtung umfasst:
eine Empfangseinheit (601), die dazu eingerichtet ist, Informationen bezüglich des Datenträgers zu empfangen;
eine Bestimmungseinheit (602), die dazu eingerichtet ist, Konfigurationsinformationen der betreffenden Protokollschichten in einem Protokollstapel der Benutzerebene zu bestimmen, der auf mindestens einer von der Makrobasisstation und der kleinen Basisstation für den Datenträger gemäß den zugehörigen Informationen und dem Protokollstapel der Benutzerebene hergestellt ist; und
eine Sendeeinheit (603), die dazu eingerichtet ist, eine Funkressourcensteuerungsnachricht, die die Konfigurationsinformationen zur Herstellung des Datenträgers enthält, an das Benutzergerät zu senden; wobei die Vorrichtung **dadurch gekennzeichnet ist,**
**dass** die Funkressourcensteuerungsnachricht ferner Synchronisationsinformationen, die es dem Benutzergerät und der kleinen Basisstation ermöglichen, die Konfigurationsinformationen synchron zu verwenden, und eine Kennung der kleinen Basisstation enthält, und eine Funkressourcensteuerungsnachricht zum Modifizieren des Signalisierungsträgers auf der kleinen Basisstation gebildet und an das Benutzergerät gesendet wird, wobei die Synchronisationsinformationen einen aktivierungszeitähnlichen Mechanismus umfassen.

13. Vorrichtung (700) zur Herstellung eines Signalisierungsträgers in einem Funkkommunikationssystem, das Multikonnektivität unterstützt, wobei das Funkkommunikationssystem ein Benutzergerät und mindestens zwei mit dem Benutzergerät verbundene Basisstationen umfasst, wobei die mindestens zwei Basisstationen mindestens eine Makrobasisstation und mindestens eine kleine Basisstation umfassen, wobei die Vorrichtung umfasst:
eine Empfangseinheit (701), die dazu eingerichtet ist, Konfigurationsinformationen der betreffenden Protokollschichten in einem Protokollstapel der Benutzerebene zu empfangen, der auf mindestens einer von der Makrobasisstation und der kleinen Basisstation für den Signalisierungsträger hergestellt ist, gemäß Bestimmung basierend auf dem Protokollstapel der Benutzerebene; und
eine Sendeeinheit (702), die dazu eingerichtet ist, eine Funkressourcensteuerungsnachricht, die die Konfigurationsinformationen zur Herstellung des Signalisierungsträgers enthält, an das Benutzergerät zu senden; und wobei die Vorrichtung **dadurch gekennzeichnet ist,**
**dass** die Funkressourcensteuerungsnachricht ferner Synchronisationsinformationen, die es dem Benutzergerät und der kleinen Basisstation ermöglichen, die Konfigurationsinformationen synchron zu verwenden, und eine Kennung der kleinen Basisstation enthält, und eine Funkressourcensteuerungsnachricht zum Modifizieren des Signalisierungsträgers auf der kleinen Basisstation gebildet und an das Benutzergerät gesendet wird, wobei die Synchronisationsinformationen einen aktivierungszeitähnlichen Mechanismus umfassen.

## Revendications

1. Procédé (400) pour établir une porteuse de données dans un système de radiocommunication prenant en charge une connectivité multiple, dans lequel le système de radiocommunication comprend un équipement utilisateur et au moins deux stations de base connectées à l'équipement utilisateur, les deux, ou plus, stations de base comprennent au moins une station de base macro et au moins une petite station de base, le procédé comprenant :
la réception (S401) d'informations se rapportant à la porteuse de données ;
la détermination (S402) d'informations de configuration de couches de protocole respectives dans une pile de protocoles de plan utilisateur, qui est établie au niveau de la station de base macro et/ou de la petite station de base pour la porteuse de données, en fonction des informations associées et de la pile de protocoles de plan utilisateur ; et
l'envoi (S403), à l'équipement utilisateur, d'un message de commande de ressources radio comportant les informations de configuration pour établir la porteuse de données ;
dans lequel la pile de protocoles de plan utilisateur établie au niveau de la station de base macro et/ou de la petite station de base pour la porteuse de données comprend une couche de protocole de convergence de données par paquets, une couche de commande de liaison radio, une couche de contrôle d'accès au support et une couche physique ;
dans lequel la station de base macro est connectée à une passerelle pour transmettre des données et la petite station de base ne comprend aucune entité de commande de ressources radio, le procédé comprenant en outre :
la réception d'informations de configuration des couches de protocole respectives déterminées au niveau de la petite station de base ; et
la formation du message de commande de ressources radio au niveau de la station de base macro, dans lequel le message de commande de ressources radio comporte des informations de configuration déterminées au niveau de la petite station de base ou comporte à la fois des informations de configuration déterminées au niveau de la petite station de base et des informations de configuration déterminées au niveau de la station de base macro, et le message de commande de ressources radio comporte en outre un identifiant de la petite station de base ; et le procédé étant **caractérisé par** les étapes suivantes :
l'envoi (S403), à partir de la station de base macro à l'équipement utilisateur, du message de commande de ressources radio, le message de commande de ressources radio comportant des informations de synchronisation permettant à l'équipement utilisateur et à la petite station de base d'utiliser les informations de configuration en synchronisation, les informations de synchronisation comprenant un mécanisme de type à temps d'activation ;
la réception, au niveau de la station de base macro, d'une réponse au message de commande de ressources radio en provenance de l'équipement utilisateur et le transfert de la réponse à la petite station de base.

2. Procédé selon la revendication 1, dans lequel le mécanisme de type à temps d'activation comprend une étiquette temporelle et un temporisateur d'activation ou une information de durée absolue.

3. Procédé selon la revendication 1 ou 2, dans lequel l'étiquette temporelle et le temporisateur d'activation sont exprimés avec un numéro de trame de système, SFN, et/ou est inclus dans un DRB-ToAddMod.

4. Procédé (400) selon la revendication 1, dans lequel la station de base macro est connectée à une passerelle pour transmettre des données, une opération de division de porteuse est effectuée dans la station de base macro pour diviser la porteuse en une première branche de porteuse transmise par le biais de la petite station de base et une seconde branche de porteuse transmise par le biais de la station de base macro et la petite station de base ne comprend aucune entité de commande de ressources radio, le procédé comprenant en outre :
la réception d'informations de configuration déterminées au niveau de la petite station de base pour la première branche de porteuse ; et
la formation du message de commande de ressources radio au niveau de la station de base macro, dans lequel le message de commande de ressources radio comporte les informations de configuration déterminées au niveau de la petite station de base pour la première branche de porteuse ou comporte à la fois des informations de configuration déterminées au niveau de la petite station de base et au niveau de la station de base macro pour la première branche de porteuse et des informations de configuration déterminées au niveau de la station de base macro pour la seconde branche de porteuse, dans lequel le message de commande de ressources radio comporte en outre un identifiant de la petite station de base associé à la première branche de porteuse et un identifiant de la station de base macro associé à la seconde branche de porteuse.

5. Procédé (400) selon la revendication 1, dans lequel la station de base macro est connectée à une passerelle pour transmettre des données, une opération de division de porteuse n'est pas effectuée dans la station de base macro et la petite station de base comprend une entité de commande de ressources radio, le procédé comprenant en outre :
la formation du message de commande de ressources radio au niveau de la petite station de base, dans lequel le message de commande de ressources radio comporte des informations de configuration déterminées au niveau de la petite station de base ou comporte à la fois des informations de configuration déterminées au niveau de la petite station de base et des informations de configuration déterminées au niveau de la station de base macro et reçues en provenance de la station de base macro ;
l'envoi, à partir de la petite station de base à l'équipement utilisateur, du message de commande de ressources radio comportant les informations de configuration ; et
la réception d'une réponse au message de commande de ressources radio en provenance de l'équipement utilisateur.

6. Procédé (400) selon la revendication 1, dans lequel la station de base macro est connectée à une passerelle pour transmettre des données, une opération de division de porteuse est effectuée dans la station de base macro pour diviser la porteuse en une première branche de porteuse transmise par le biais de la petite station de base et une seconde branche de porteuse transmise par le biais de la station de base macro et la petite station de base comprend une entité de commande de ressources radio, le procédé comprenant en outre :
la formation du message de commande de ressources radio au niveau de la petite station de base, dans lequel le message de commande de ressources radio comporte des informations de configuration déterminées pour la première branche de porteuse ou comporte à la fois des informations de configuration déterminées pour la première branche de porteuse et des informations de configuration déterminées pour la seconde branche de porteuse et reçues en provenance de la station de base macro, dans lequel les informations de configuration déterminées pour la première branche de porteuse sont les informations de configuration déterminées au niveau de la petite station de base pour la première branche de porteuse ou comporte à la fois des informations de configuration déterminées au niveau de la petite station de base et au niveau de la station de base macro pour la première branche de porteuse et le message de commande de ressources radio comporte en outre un identifiant de la petite station de base associé à la première branche de porteuse et un identifiant de la station de base macro associé à la seconde branche de porteuse ;
l'envoi du message de commande de ressources radio à partir de la petite station de base à l'équipement utilisateur ; et
la réception d'une réponse au message de commande de ressources radio en provenance de l'équipement utilisateur.

7. Procédé (400) selon la revendication 4 ou 6, dans lequel le message de commande de ressources radio est un message de reconfiguration de connexion de commande de ressources radio et dans le message de reconfiguration de connexion de commande de ressources radio :
les informations de configuration pour la première branche de porteuse et la seconde branche de porteuse sont respectivement incluses dans deux drb-ToAddMods et sont respectivement identifiées avec des identifiants de la petite station de base et de la station de base macro et les deux drb-ToAddMods sont inclus dans la même drb-ToAddModList ; ou
les informations de configuration pour la première branche de porteuse et la seconde branche de porteuse sont respectivement incluses dans le même drb-ToAddMod et sont respectivement identifiées avec des identifiants de la petite station de base et de la station de base macro et le drb-ToAddMod est inclus dans la même drb-ToAddModList.

8. Procédé (400) selon la revendication 1, la station de base macro et la petite station de base étant connectées à une passerelle pour transmettre des données, une opération de division de porteuse n'étant pas effectuée dans la station de base macro et la petite station de base ne comprenant aucune entité de commande de ressources radio, et le procédé comprenant en outre :
la réception, en provenance de la petite station de base, d'informations de configuration déterminées à partir des informations associées ;
l'envoi, à partir de la station de base macro à l'équipement utilisateur, du message de commande de ressources radio comportant les informations de configuration déterminées au niveau de la petite station de base, pour établir la porteuse de données, dans lequel le message de commande de ressources radio comporte en outre un identifiant de la petite station de base et des informations de synchronisation permettant à l'équipement utilisateur et à la petite station de base d'utiliser les informations de configuration en synchronisation ; et
la réception d'une réponse au message de commande de ressources radio en provenance de l'équipement utilisateur et le transfert de la réponse à la petite station de base ;
ou
l'envoi des informations de configuration déterminées au niveau de la petite station de base à la station de base macro ;
la réception, en provenance de la station de base macro, du message de commande de ressources radio comportant les informations de configuration déterminées au niveau de la petite station de base et de la station de base macro ;
l'envoi du message de commande de ressources radio à partir de la petite station de base à l'équipement utilisateur ; et
la réception d'une réponse au message de commande de ressources radio en provenance de l'équipement utilisateur.

9. Procédé selon la revendication 1, la station de base macro et la petite station de base étant connectées à une passerelle pour transmettre des données, une opération de division de porteuse n'étant pas effectuée dans la station de base macro et la petite station de base comprenant une entité de commande de ressources radio, et le procédé comprenant en outre :
l'envoi, à partir de la petite station de base à l'équipement utilisateur, du message de commande de ressources radio comportant des informations de configuration déterminées par la petite station de base en fonction des informations associées ; et
la réception d'une réponse au message de commande de ressources radio en provenance de l'équipement utilisateur.

10. Procédé (500) pour établir une porteuse de signalisation dans un système de radiocommunication prenant en charge une connectivité multiple, dans lequel le système de radiocommunication comprend un équipement utilisateur et au moins deux stations de base connectées à l'équipement utilisateur, les deux, ou plus, stations de base comprennent au moins une station de base macro et au moins une petite station de base, le procédé comprenant :
la réception (S501) d'informations de configuration de couches de protocole respectives dans une pile de protocoles de plan utilisateur, qui est établie au niveau de la station de base macro et/ou de la petite station de base pour la porteuse de signalisation, déterminées en se basant sur la pile de protocoles de plan utilisateur ; et
l'envoi (S502), à l'équipement utilisateur, du message de commande de ressources radio comportant les informations de configuration pour établir la porteuse de signalisation ; le procédé étant **caractérisé en ce que**:
le message de commande de ressources radio comporte en outre des informations de synchronisation permettant à l'équipement utilisateur et à la petite station de base d'utiliser les informations de configuration en synchronisation et un identifiant de la petite station de base, et un message de commande de ressources radio pour modifier la porteuse de signalisation est formé au niveau de la petite station de base et envoyé à l'équipement utilisateur, les informations de synchronisation comprenant un mécanisme de type à temps d'activation.

11. Procédé (500) selon la revendication 10, dans lequel une configuration de couches de protocole respectives dans la pile de protocoles de plan utilisateur, qui est établie au niveau de la station de base macro et/ou de la petite station de base pour la porteuse de signalisation, comprend une configuration pour une couche de commande de liaison radio, une couche de contrôle d'accès au support et une couche physique, le procédé comprenant en outre :
la réception d'informations de configuration de couches de protocole respectives déterminées au niveau de la petite station de base ; et
la formation des informations de commande de ressources radio au niveau de la station de base macro, dans lequel le message de commande de ressources radio comporte des informations de configuration déterminées au niveau de la petite station de base ou comporte à la fois des informations de configuration déterminées au niveau de la petite station de base et des informations de configuration déterminées au niveau de la station de base macro.

12. Appareil (600) pour établir une porteuse de données dans un système de radiocommunication prenant en charge une connectivité multiple, dans lequel le système de radiocommunication comprend un équipement utilisateur et au moins deux stations de base connectées à l'équipement utilisateur, les deux, ou plus, stations de base comprennent au moins une station de base macro et au moins une petite station de base, l'appareil comprenant :
une unité de réception (601) configurée pour recevoir des informations se rapportant à la porteuse de données ;
une unité de détermination (602) configurée pour déterminer des informations de configuration de couches de protocole respectives dans une pile de protocoles de plan utilisateur, qui est établie au niveau de la station de base macro et/ou de la petite station de base pour la porteuse de données, en fonction des informations associées et de la pile de protocoles de plan utilisateur ; et
une unité d'envoi (603) configurée pour envoyer, à l'équipement utilisateur, un message de commande de ressources radio comportant les informations de configuration pour établir la porteuse de données ; et l'appareil étant **caractérisé en ce que**
le message de commande de ressources radio comporte en outre des informations de synchronisation permettant à l'équipement utilisateur et à la petite station de base d'utiliser les informations de configuration en synchronisation et un identifiant de la petite station de base, et un message de commande de ressources radio pour modifier la porteuse de signalisation est formé au niveau de la petite station de base et envoyé à l'équipement utilisateur, les informations de synchronisation comprenant un mécanisme de type à temps d'activation.

13. Appareil (700) pour établir une porteuse de signalisation dans un système de radiocommunication prenant en charge une connectivité multiple, dans lequel le système de radiocommunication comprend un équipement utilisateur et au moins deux stations de base connectées à l'équipement utilisateur, les deux, ou plus, stations de base comprennent au moins une station de base macro et au moins une petite station de base, l'appareil comprenant :
une unité de réception (701) configurée pour recevoir des informations de configuration de couches de protocole respectives dans une pile de protocoles de plan utilisateur, qui est établie au niveau de la station de base macro et/ou de la petite station de base pour la porteuse de signalisation, déterminées en se basant sur la pile de protocoles de plan utilisateur ; et
une unité d'envoi (702) configurée pour envoyer, à l'équipement utilisateur, un message de commande de ressources radio comportant les informations de configuration pour établir la porteuse de signalisation ; et l'appareil étant **caractérisé en ce que** :
le message de commande de ressources radio comporte en outre des informations de synchronisation permettant à l'équipement utilisateur et à la petite station de base d'utiliser les informations de configuration en synchronisation et un identifiant de la petite station de base, et un message de commande de ressources radio pour modifier la porteuse de signalisation est formé au niveau de la petite station de base et envoyé à l'équipement utilisateur, les informations de synchronisation comprenant un mécanisme de type à temps d'activation.
